# EUROPÄISCHE PATENTSCHRIFT

(11) **EP 1 717 482 B1**
(45) Veröffentlichungstag und Bekanntmachung des Hinweises auf die Patenterteilung: **03.09.2008**
(21) Anmeldenummer: 06006368.2
(22) Anmeldetag: 28.03.2006
(51) Int. Cl.: F16G 11/00

(54) **Befestigungshaken für Halteseil, insb. für Spanngurt**
Fastening hook for retaining cable, particularly for clamping strap
Crochet de fixation pour câble de retenue, en particulier pour sangle de serrage

(30) Priorität: 26.04.2005 DE 202005006648 U
(43) Veröffentlichungstag der Anmeldung: 02.11.2006
(73) Patentinhaber: IDEEMATEC Deutschland GmbH, 94574 Wallerfing (DE)
(72) Erfinder: Kufner, Johann, 94527 Aholming/Tabertshausen (DE)
(74) Vertreter: advotec.

(56) Entgegenhaltungen:
- DE-U1-8202005 006 64
- FR-A1- 2 427 508
- GB-A- 1 416 994
- US-A- 1 459 329
- US-A- 6 012 204
- US-A1- 2005 223 528

## Beschreibung

Die Erfindung betrifft einen Befestigungshaken mit Halteseil, insbesondere mit einem Spanngurt aus elastisch nachgiebigem Material. Außerdem betrifft die Erfindung ein mit einem erfindungsgemäßen Befestigungshaken versehenes Halteseil, insbesondere einen mit einem derartigen Befestigungshaken versehenen elastisch nachgiebigen Spanngurt.

Ein derartiger Befestigungshaken mit Halteseil, wie er im Einzelnen im Oberbegriff des beiliegenden Anspruches 1 beschrieben ist, ist aus den Figuren 25 und 26 der US-A-6012204 vorbekannt. Bei diesem zum Stand der Technik zählenden Befestigungshaken aus Draht liegt der Klemmhaken am Ende der das hülsenförmige Teil bildenden Drahtwendel an der Außenseite derselben in einer radialen Ebene, sodass der in Richtung des Widerlagers gesehen vor der Drahtwendel liegende freie Seilabschnitt des Halteseiles nach Umbiegung um 180° in axialer Richtung bleibend von oben in die seitliche Öffnung des Klemmhakens einführbar ist. Da sich auf diese Weise bei Zugbelastung des Halteseiles der freie Seilabschnitt ganz leicht aus dem Klemmhaken herausziehen lässt, ist zusätzlich vor dem Klemmhaken ein V-förmiger Schlitz zum Festklemmen des Halteseilendes vorgesehen, welcher durch den sich verkleinernden Abstand zwischen zwei Windungen der Drahtwendel gebildet ist und durch den das Halteseil im Bereich seiner 180°-Abbiegung geführt wird. Diese Konstruktion hat den Nachteil, dass bei wechselnder Belastungsrichtung des Halteseiles mit einer Komponente in Richtung der Schlitzerweiterung das Halteseil in diesem Schlitz gelockert werden kann, sodass die Seilhalterung nicht länger gewährleitstet ist.

Ausgehend von dem bekannten Befestigungshaken zum lösbaren Anhaken eines Halteseiles an einem Widerlager gemäß der US-A-6012204, wie er im Oberbegriff des beiliegenden Anspruches 1 beschrieben ist, liegt der vorliegenden Erfindung die Aufgabe zu Grunde, eine andere Konstruktionsform eines Befestigungshakens zu schaffen, mit der ebenfalls die Seillänge veränderbar und der freie Seilabschnitt durch Verklemmen verankerbar ist, wobei sich die erfindungsgemäße Konstruktion insbesondere auch für die Verwendung eines Halteseiles in Form eines Spanngurtes aus elastisch nachgiebigem Material eignet.

Diese Aufgabe ist mit den Merkmalen gemäß dem Kenneichen des beiliegenden Anspruches 1 gelöst.

Die erfindungsgemäßen Merkmale erbringen den Vorteil, dass durch die Abbiegung des freien Seilabschnittes um etwa 90° zur Einführung in die Öffnung des Klemmhakens die Außenseite des Seiles stark gedehnt wird, während dessen Innenseite durch die Seilabbiegung verbreitert ist. Durch diese Verbreiterung quetscht sich das Seil noch besser in den Klemmhaken hinein und wird durch denselben in ausreichendem Maße arretiert. Diese Innenseitenverbreiterung des abgebogenen Seilendes tritt vor allem dann ein, wenn als Halteseil ein elastisch nachgiebiger Spanngurt Verwendung findet. Durch die erfindungsgemäße Führungsöse wird dabei zusätzlich ein Verrutschen des freien Seilabschnittes gegenüber dem Klemmhaken völlig ausgeschlossen, sodass die Abbiegung des freien Seilabschnittes um etwa 90° zur Einführung in die Hakenöffnung auch bei in der Richtung wechselnder Hakenbelastung aufrechterhalten bleibt, was eine gleichbleibende Klemmwirkung des Halteseiles gewährleistet.

Aus der US-A-1459329 ist zwar ein Befestigungshaken mit Halteseil bekannt, der ebenfalls ein hülsenförmiges Teil aufweist, durch welches das Halteseil hindurchführbar ist und das zum Verändern der Seillänge längs des Halteseiles verschoben werden kann, wobei das hülsenförmige Teil an der Außenseite einen fest verbundenen Seilhaken aufweist, der in der vom Widerlager wegweisenden Richtung offen ist und in einer zur Längsachse des hülsenförmigen Teiles im wesentlichen parallelen Ebene liegt. In diesen Seilhaken wird der über die vordere, dem Widerlager benachbarte Randkante des hülsenförmigen Teiles geführte freie Seilabschnitt unter nachfolgender Abbiegung um etwa 90° in die Umfangsrichtung des hülsenförmigen Teiles eingeführt. Dabei ist allerdings der innere Öffnungsquerschnitt dieses Seilhakens größer als die Dicke des Halteseiles, sodass das Seilende nicht innerhalb des Klemmhakens verklemmt werden kann. Vielmehr ist zu diesem Zweck auch hier eine V-Nut vorgesehen, durch welche der freie Seilabschnitt nach dem Herumführen über die betreffende Randkante des hülsenförmigen Teiles hindurchgeleitet und darin verklemmt wird. Auch ist dieser bekannte Befestigungshaken kein Drahtmodell wie beim Anmeldungsgegenstand, sondern ein Massivteil, bei dem eine Führungsöse wie bei der Erfindung ebenfalls nicht vorgesehen ist.

Eine besonders einfache Konstruktion der Führungsöse ergibt sich dann, wenn - wie im Anspruch 2 beansprucht - der die Öse bildende Teil des Hakenschaftes zu einer Drahtwendel gewickelt ist, deren Achse im wesentlichen lotrecht zur Erstreckungsrichtung des Schaftes verläuft.

Zweckmäßigerweise liegt die Führungsöse in axialer Richtung des hülsenförmigen Teiles zum Widerlager hin gesehen genau über dem Klemmhaken oder ist dazu etwas seitlich versetzt, wobei der Öffnungsquerschnitt der Führungsöse dem Querschnitt des Halteseiles bzw. Spanngurtes entspricht oder größer ist, wie dies in den Ansprüchen 3 und 4 beansprucht ist.

Gemäß dem beiliegenden Anspruch 5 ist in vorteilhafter Weise der Klemmhaken so an der Außenseite der Drahtwendel vorgesehen, dass sein Hakenboden etwa in der Ebene des vorderen Randes der Drahtwendel oder unterhalb dieses Randes liegt.

Ein besonders vorteilhafter Drahtaufbau eines erfindungsgemäßen Befestigungshakens ergibt sich dann, wenn gemäß Anspruch 6 das hintere Ende des die Drahtwendel bildenden Drahtes in im wesentlichen axialer Richtung längs ihrer Außenseite nach oben in Richtung zu ihrem vorderen Ende hin geführt und dann zur Bildung des Klemmhakens entsprechen nach außen und unten umgebogen ist.

Wie im Anspruch 7 beansprucht, ist bei Verwendung eines elastisch nachgiebigen Spanngurtes als Halteseil zweckmäßigerweise die Öffnungsbreite des Klemmhakens kleiner als die Dicke des gespannten Gurtes gewählt. Dadurch ist auch bei unter Spannung stehendem Gurt die gewünschte Klemmwirkung des Klemmhakens sichergestellt.

Unter Bezugnahme auf den beiliegenden Anspruch 8 umfasst die Erfindung auch ein Halteseil, insbesondere in Form eines Spanngurtes aus elastisch nachgiebigem Material, dessen eines Seilende, vorzugsweise dessen beide Seilenden, mit einem Befestigungshaken gemäß einem oder mehreren der Ansprüche 1 - 7 versehen ist.

Besonders gute Klemmwirkungen ergeben sich dabei für das Halteseil dann, wenn gemäß Anspruch 9 das Seil oder der Spanngurt einen Rundquerschnitt, vorzugsweise einen Kreisquerschnitt besitzt.

Wie im Anspruch 10 beansprucht, ist zur zusätzlichen Sicherung des festgeklemmten Halteseiles das aus dem Klemmhaken heraustretende Seilende zwischen den Boden des Klemmhakens und den über den vorderen Rand der Drahtwendel geführten Seilabschnitt wieder eingeschoben und zur Knotenbildung festgezogen

Die Erfindung wird im folgenden an Hand schematischer Zeichnungen an einem Ausführungsbeispiel nach näher erläutert. In den Zeichnungen zeigen:
- Figur 1: eine Seitenansicht eines Halteseiles mit am Seilende vorgesehenen Befestigungshaken aus biegesteifem Draht, wobei der eine obere Befestigungshaken gemäß der Erfindung ausgebildet ist,
- Figur 2: den oberen erfindungsgemäßen Befestigungshaken von Figur 1 mit in den Klemmhaken eingeführtem Seilabschnitt,und
- Figur 3: eine der Figur 2 entsprechende Darstellung, wobei aber der in den Klemmhaken eingeführte freie Seilabschnitt durch Knotenbildung zusätzlich gesichert ist.

In der nachfolgenden Figurenbeschreibung sind der Einfachheit halber einander entsprechende Teile mit den gleichen Bezugszeichen bezeichnet.

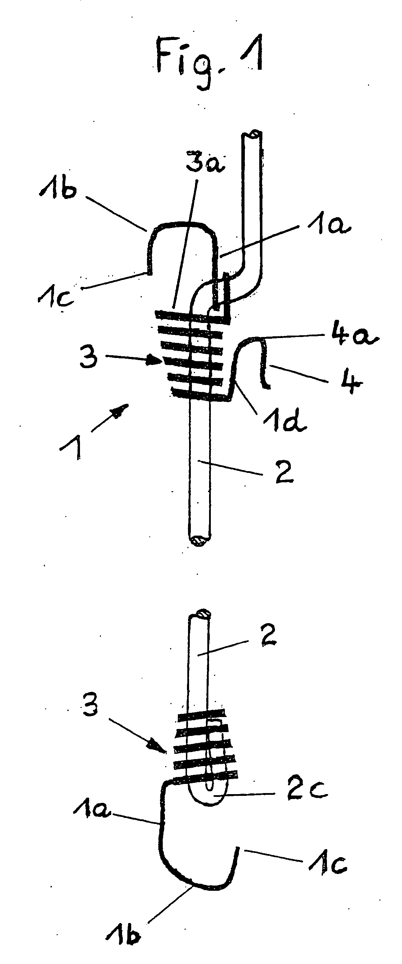

Das in Figur 1 gezeigte Halteseil 2 ist an seinem unteren zu einer Schlaufe 2c geformten Ende mit einem zum Stand der Technik zählenden Befestigungshaken versehen, bei dem der Hakenschaft 1a zusammen mit dem gebogenen Hakenteil 1b und einem hülsenförmigen Teil 3 einstückig aus einem biegesteifen Draht 1c gebildet ist, wobei der Draht 1c zu einer das hülsenförmige Teil bildenden Drahtwendel gewickelt ist, die sich zu ihrem hinteren, dem Widerlager abgewandten Ende konisch verjüngt, damit die Seilschlaufe 2c nicht aus dem Inneren dieser Drahtwendel gleiten kann, sondern darin blockiert ist. Das vordere Ende der Drahtwendel 3 endet in dem Hakenschaft 1 a und dem nachfolgenden gebogenen Hakenteil 1b des Befestigungshakens. Damit das Halteseil in der Länge verändert werden kann, ist der obere, in Figur 1 gezeigte Befestigungshaken 1 längs des Seiles verschiebbar und arretierbar. Zu diesem Zweck weist dieser Befestigungshaken eine Einrichtung 4 zur lösbaren Seilarretierung auf, in welche in Richtung des Widerlagers gesehen der vor dem hülsenförmigen Teil 3 liegende freie Seilabschnitt 2a einführbar und durch Verklemmen verankerbar ist. Diese Klemmeinrichtung ist durch einen Klemmhaken 4 gebildet, der an der Außenseite des hülsenförmigen Teiles 3 vorgesehen ist und in einer Ebene liegt, die zur Längsachse der das hülsenförmige Teil des Befestigungshakens bildenden Drahtwendel 3 parallel verläuft. Der Klemmhaken 4 ist in der vom Widerlager aus zum Befestigungshaken hinweisenden Richtung offen, wobei dessen Hakenboden 4a etwa in der Ebene des vorderen, zum Widerlager hinweisenden Randes 3a der Drahtwendel 3 liegt. Gebogener Hakenteil 1 b, Hakenschaft 1a sowie die Drahtwendel 3 und der Klemmhaken 4 bestehen einstückig aus ein und demselben biegesteifen Drahtstück 1c, das in Form des erfindungsgemäß ausgebildeten Befestigungshakens 1 der Einfachheit halber in Seitenansicht dargestellt ist.

Wie in Figur 1 ferner gezeigt, ist zur Hakenbildung das hintere Ende 1d des die Drahtwendel 3 bildenden Drahtes 1 c in im wesentlichen axialer Richtung längs der Außenseite der Drahtwendel nach oben in Richtung zu dem vorderen Wendelende 3a hingeführt und dann zur Bildung des Klemmhakens 4 entsprechend nach außen und unten gebogen.

Anstelle des in Figur 1 gezeigten unteren Befestigungshakens, der wie bereits erwähnt am unteren Seilende verankert ist, kann gegebenenfalls hier auch ein erfindungsgemäßer Befestigungshaken Verwendung finden, wie er im oberen Teil der Figur 1 gezeigt ist.

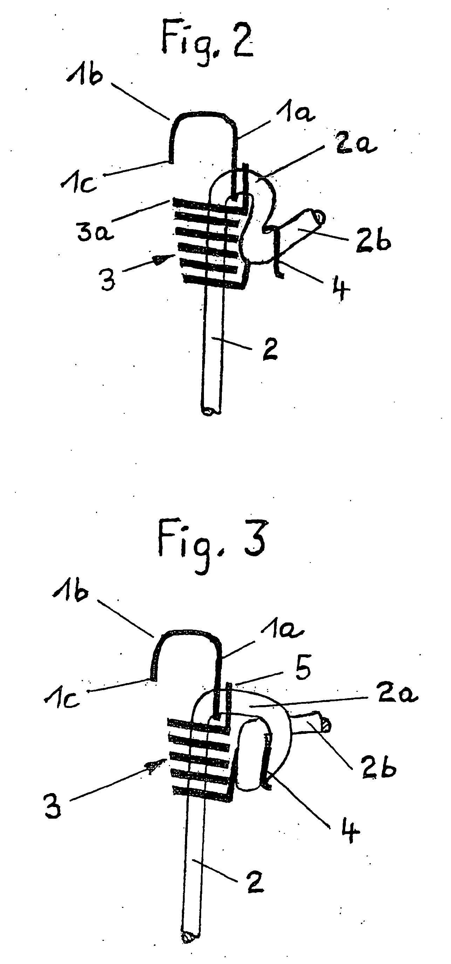

Figur 2 zeigt die Art und Weise, wie das Halteseil 2 in den Klemmhaken 4 eingeklemmt werden kann. Zu diesem Zweck ist der freie Seilabschnitt 2a über die vordere, dem Widerlager benachbarte Randkante 3a des hülsenförmigen Teiles 3 geführt und dann zur Einbringung in den Klemmhaken 4 um etwa 90° in die Umfangsrichtung des hülsenförmigen Teiles 3 abgebogen. Die Öffnungsbreite des Klemmhakens 4, der in einer zur Längsachse des hülsenförmigen Teiles 3 im wesentlichen parallelen Ebene liegt, ist dabei kleiner als die Dicke des Halteseiles 2 gewählt, um das Halteseil in diesem Klemmhaken 4 festklemmen zu können. Durch die Seilabbiegung um etwa 90° zur Einführung des Seiles in den Klemmhaken 4 wird eine Stauchung und Verbreiterung des Seilquerschnitts an der dem Klemmhaken zugewandten Innenseite des Seiles erreicht, wodurch die Klemmwirkung des Hakens gesteigert wird. Bei Verwendung eines elastisch nachgiebigen Spanngurtes als Halteseil ist zweckmäßigerweise die Öffnungsbreite des Klemmhakens 4 höchstens gleich oder kleiner als die Dicke des gespannten Gurtes. Dadurch wird eine ausreichende Klemmwirkung bei jedem Betriebszustand des Spanngurtes erreicht.

Wie in der Figur 1 gezeigt, liegt bei dem dargestellten Ausführungsbeispiel der Boden 4a des Klemmhakens 4 unterhalb des vorderen Randes 3a des hülsenförmigen Teiles 3, sodass der über den Hülsenrand 3a geführte freie Seilabschnitt 2a erst in axialer Richtung längs der Außenwandung des hülsenförmigen Teiles 3 nach unten und dann unter Abbiegung etwa um 90° in den Klemmhaken 4 eingeführt wird. Alternativ dazu kann aber auch der Hakenboden 4a etwa in der Ebene des vorderen Randes 3a des hülsenförmigen Teiles 3 liegen.

Um das Halteseil 2 in dem Klemmhaken 4 zusätzlich zu sichern, ist, wie in Figur 3 dargestellt, das aus dem Klemmhaken 4 heraustretende Seilende 2b zwischen den Boden 4a des Klemmhakens 4 und den über den vorderen Rand 3a der Drahtwendel 3 geführten Seilabschnitt 2a wieder eingeschoben und zur Knotenbildung festgezogen. Bei Zugbeanspruchung des Halteseiles wird dadurch das Seilende 2b von dem über den vorderen Rand 3a der Drahtwendel 3 geführten Seilabschnitt 2a nach unten fest auf den Klemmhakenboden 4a angedrückt, sodass hierdurch eine zusätzliche Sicherung für das festgeklemmte Halteseil geschaffen ist.

Zum Führen des freien Seilabschnittes 2a über die vordere Randkante 3a der Drahtwendel 3 zum Klemmhaken 4 hin ist, wie in sämtlichen Figuren gezeigt, eine Führungsöse 5 vorgesehen, die gleichfalls einstückig aus dem biegesteifen Draht 1 c gebildet ist, wobei ein Teil des Hakenschaftes 1a zu einer Drahtwendel gewickelt ist, deren Achse im wesentlichen lotrecht zur Erstreckungsrichtung des Schaftes 1a verläuft. Der Öffnungsquerschnitt dieser Führungsöse entspricht vorzugsweise dem Querschnitt des Halteseiles 2 oder ist etwas größer, sodass das Halteseil ohne Schwierigkeiten durch diese Führungsöse gleiten kann, und die Position dieser Führungsöse ist in axialer Richtung der Drahtwendel zum Widerlager hin gesehen oberhalb des Klemmhakens 4 vorgesehen. Dadurch wird absolut sichergestellt, dass der freie Seilabschnitt 2a beim Einführen in den Klemmhaken 4 um etwa 90° umgebogen wird und deshalb in demselben durch eine entsprechende Klemmung festsitzt.

Wie in den Figuren gezeigt, besitzt das Halteseil insbesondere in Form eines Spanngurtes einen Kreisquerschnitt, obwohl andere Querschnittsformen möglich sind. In diesem Zusammenhang sei noch bemerkt, dass auch bei dem erfindungsgemäßen Befestigungshaken die Drahtwendel 3 und die Ösenwendel 5 vorzugsweise einen Kreisquerschnitt aufweisen, obwohl natürlich auch andere Querschnittsformen denkbar sind.

## Patentansprüche

1. Befestigungshaken (1) mit Halteseil (2) zum lösbaren Anhaken dieses Halteseiles (2) an einem Widerlager, wobei der Befestigungshaken (1) zur lösbaren Arretierung an dem Halteseil (2) und zum Verändern der Seillänge mit dem Hakenschaft (1a) und einem daran anschließenden hülsenförmigen Teil (3) einstückig aus einem biegesteifen Draht (1c) gebildet ist, welcher im Anschluss an den Hakenschaft (1a) zu einer das hülsenförmige Teil bildenden Drahtwendel (3) mit einer zum Hakenschaft (1a) vorzugsweise parallelen Längsachse gewickelt ist, wobei das Halteseil (2) axial durch die Drahtwendel (3) hindurchführbar ist, welche gemeinsam mit Befestigungshaken (1) und dessen Hakenschaft (1 a) längs dieses Halteseiles verschiebbar ist und sich zu ihrem hinteren, dem Widerlager abgewandten Ende hin vorzugsweise konisch verjüngt, an das sich eine an der Außenseite der Drahtwendel (3) liegende Einrichtung zur lösbaren Seilarretierung in Form eines einstückig aus dem Drahtende gebildeten Seilklemmhakens (4) anschließt, in welchen in Richtung des Widerlagers gesehen der vor der Drahtwendel (3) liegende freie Seilabschnitt (2a) zur Verankerung einführbar ist, **dadurch gekennzeichnet, dass** der Klemmhaken (4), dessen Öffnungsbreite zur Seilarretierung kleiner als sie Dicke des Halteteiles (2) gewählt ist, in einer zur Längsachse der Drahtwendel (3) im wesentlichen parallelen Ebene liegt und in der vom Widerlager wegweisenden Richtung offen ist, wobei in diesen Klemmhaken (4) der über die vordere, dem Widerlager benachbarte Randkante (3a) der Drahtwendel (3) geführte freie Seilabschnitt unter nachfolgender Abbiegung um etwa 90° in die Umfangsrichtung der Drahtwendel einführbar ist, und dass zum Führen des freien Seilabschnittes (2a) über die vordere Randkante (3a) der Drahtwendel (3) eine gleichfalls einstückig aus dem biegesteifen Draht (1c) gebildete Führungsöse (5) vorgesehen ist, wobei ein Teil des den Schaft (1a) des Befestigungshakens (1) bildenden Drahtabschnittes zu einer Öse gebogen ist, durch die hindurch der freie Seilabschnitt (2a) zum Klemmhaken (4) hinleitbar ist.

2. Befestigungshaken mit Halteseil nach Anspruch 1, **dadurch gekennzeichnet, dass** der die Öse (5) bildende Teil des Hakenschaftes (1a) zu einer Drahtwendel gewickelt ist, deren Achse im wesentlichen lotrecht zur Erstreckungsrichtung des Schaftes (1 a) verläuft.

3. Befestigungshaken mit Halteseil nach Anspruch 1 oder 2, **dadurch gekennzeichnet, dass** die Führungsöse (5) in axialer Richtung der Drahtwendel (3) zum Widerlager hin gesehen genau über dem Klemmhaken (4) liegt oder dazu seitlich versetzt ist.

4. Befestigungshaken mit Halteseil nach einem oder mehreren der Ansprüche 1 - 3, **dadurch gekennzeichnet, dass** der Öffnungsquerschnitt der Führungsöse (5) dem Querschnitt des Halteseiles (2) entspricht oder größer ist.

5. Befestigungshaken mit Halteseil nach einem oder mehreren der Ansprüche 1 - 4, **dadurch gekennzeichnet, dass** der Klemmhaken (4) so an der Außenseite der Drahtwendel (3) vorgesehen ist, dass sein Hakenboden (4a) etwa in der Ebene des vorderen Randes (3a) der Drahtwendel (3) oder unterhalb dieses Randes (3a) liegt.

6. Befestigungshaken mit Halteseil nach Anspruch 5, **dadurch gekennzeichnet, dass** das hintere Ende (1d) des die Drahtwendel (3) bildenden Drahtes (1c) in im wesentlichen axialer Richtung längs ihrer Außenseite nach oben in Richtung zu ihrem vorderen Ende (3a) hin geführt und dann zur Bildung des Klemmhakens (4) entsprechend nach außen und unten umgebogen ist.

7. Befestigungshaken mit Halteseil nach einem oder mehreren der Ansprüche 1 - 6, **dadurch gekennzeichnet, dass** bei Verwendung eines elastisch nachgiebigen Spanngurtes als Halteseil (2) die Öffnungsbreite des Klemmhakens (4) kleiner als die Dicke des gespannten Gurtes (2) ist.

8. Halteseil, insbesondere in Form eines Spanngurtes aus elastisch nachgiebigem Material, **dadurch gekennzeichnet, dass** dessen eines Ende, vorzugsweise dessen beide Enden mit einem Befestigungshaken (1) gemäß einem oder mehreren der Ansprüche 1 - 7 versehen ist.

9. Halteseil nach Anspruch 8, **dadurch gekennzeichnet, dass** das Seil (2) einen Rundquerschnitt, vorzugsweise einen Kreisquerschnitt besitzt.

10. Halteseil nach Anspruch 8 oder 9, **dadurch gekennzeichnet, dass** zur Sicherung des festgeklemmten Halteseiles (2) das aus dem Klemmhaken (4) heraustretende Seilende (2b in Figur 3) zwischen den Boden (4a) des Klemmhakens (4) und den über den vorderen Rand (3a) der Drahtwendel (3) geführten Seilabschnitt (2a) wieder eingeschoben und zur Knotenbildung festgezogen ist.

## Claims

1. Fastening hook (1) for retaining cable (2) for the detachable hooking of this retaining cable (2) on a counter bearing, wherein the fastening hook (1) for the detachable adjustment on the retaining cable (2) and to modify the length of the cable with the shaft of the hook (1a) and the one of the connected hollow-shaped component (3) which is formed by a flexural resistant conductor (1c), which in connection with the ending of the shaft of the hook (1a) with a wire spiral (3) forming the hollow-shaped component is wrapped around a longitudinal axis preferably parallel to one of the hook shafts (1a), wherein the retaining cable (2) can be axially passed through the wire spiral (3) which can be moved along the retaining cable with the fastening hook (1) and its hook shaft (1a) and which preferably becomes cone-shaped towards its rear ending opposite the counter bearing, with which an equipment aligned on the external side of the wire spiral (3) and next to the detachable cable adjustment having the shape of a clamping strap hook (4) made of one piece by the end of the conductor and into which towards the direction of the counter bearing the free section of the cable (2a) is inserted in order to be anchored, **characterized in that** the clamping strap hook (4) whose opening width towards the cable adjustment is smaller than the thickness of the retaining cable (2) and which is aligned on an essentially parallel level to the longitudinal axis of the wire spiral (3) and is open towards the direction indicated by the counter bearing, wherein into this clamping strap hook (4) you can insert the free cable section aligned on the frontal surrounding border (3a) next to the counter bearing of the wire spiral (3) according to the following curve of 90° towards the circumference direction of the wire spiral and that in order to conduct the free cable section (2a) over the frontal surrounding border (3a) of the wire spiral (3) there is a further guide lug (5) also made of one piece of a flexural resistant conductor (1c) wherein a part of the conductor section forming the shaft (1a) of the fastening hook (1) is flexed to a lug through which the free cable section (2a) can be conducted to the clamping strap hook (4).

2. Fastening hook equipped with a retaining cable according to claim 1, **characterized in that** the part of the hook shaft (1a) forming the lug (5) is wrapped upon the wire spiral whose axis is essentially perpendicular to the direction of extension of the shaft (1a).

3. Fastening hook equipped with a retaining cable according to claim 1 or 2, **characterized in that** the guide lug (5) is positioned in an axial direction of the wire spiral (3) to the counter bearing exactly on the upper side of the clamping strap hook (4) or in a lateral position to it.

4. Fastening hook equipped with a retaining cable according to one of the previous claims 1 - 3, **characterized in that** the cross section of the opening of the guide lug (5) corresponds to the cross section of the retaining cable (2) or exceed it in length.

5. Fastening hook equipped with a retaining cable according to one of the previous claims 1 - 4, **characterized in that** the clamping strap hook (4) is positioned on the external side of the wire spiral (3) so that the basement of the hook (4a) is positioned approximately on the level of the frontal border (3a) of the wire spiral (3) or on the lower side of this border (3a).

6. Fastening hook equipped with a retaining cable according to claim 5 **characterized in that** the rear ending (1d) of the conductor (1c) forming the wire spiral (3) is essentially aligned in an axial direction along its external part towards the upper side towards the direction of its frontal ending (3a) and is then flexed in order to form the clamping strap hook (4) corresponding towards the external and lower side.

7. Fastening hook equipped with a retaining cable according to one of the previous claims 1 - 6, **characterized in that** by making use of an elastic flexible tension belt as retaining cable (2) the opening width of the clamping strap hook (4) is smaller than the thickness of the tensioned belt (2).

8. Retaining cable, primarily in the form of a tension belt made of elastic and flexible material, **characterized in that** one of its endings or preferably two of them are equipped with a fastening hook (1) according to one or more of one of the previous claims 1 - 7.

9. Retaining cable according to claim 8, **characterized in that** the cable (2) has a round cross section, preferably a circle cross section.

10. Retaining cable according to claim 8 or 9, **characterized in that** to lock the retaining cable (2) the ending of the cable (2b in figure 3) stepping out of the clamping strap hook (4) is inserted again between the basement (4a) of the clamping strap hook (4) and the section of the cable (2a) conducting the wire spiral (3) and is fastened to form a knot.

## Revendications

1. Crochet de fixation (1) avec câble de retenue (2), pour accrocher de façon détachable ce câble de retenue (2) sur un contre-appui, étant donné que le crochet de fixation (1) pour bloquer le câble de retenue (2) de façon capable d'être détachée et pour le changement de la longueur du câble à laide de la queue de crochet (1a) et une partie (3) en forme de manchons, raccordée à cette dernière, est formé d'une seule pièce constituée à partir d'un fil (1c) rigide, lequel est embobiné, immédiatement après la queue de crochet (1a), pour former un fil hélicoïdal (3), formant la partie en forme de manchons, suivant un axe longitudinal, de préférence parallèle à la queue de crochet (1a), étant donné que le câble de retenue (2) peut passer axialement à travers le fil hélicoïdal (3), lequel est capable d'être déplacée conjointement avec le crochet de fixation (1) et la queue (1a) de crochet, le long de ce câble de retenue et qui diminue vers son extrémité arrière détournée vers le contre-appui, de préférence de manière conique, à laquelle est raccordé un dispositif d'arrêt de câble à déblocage, disposé à la face externe du fil hélicoïdal (3), en forme d'un coinceur (4) de câble formé d'une seule pièce à partir de l'extrémité du fil, et dans lequel, la partie libre du câble (2a), disposé, vue dans le sens du contre-appui, devant le fil hélicoïdal (3), est capable d'être introduite dans le but d'un ancrage, **caractérisé en ce que** le coinceur (4), dont la largeur de l'ouverture destinée au blocage du câble est choisie plus petite que la largeur du câble de retenue (2), est situé dans un plan essentiellement parallèle par rapport à l'axe longitudinale du fil hélicoïdal (3) et est ouvert dans la direction opposée au contre-appui, étant donné que au niveau de ce coinceur (4), la partie libre du câble menée sur le bord marginal (3a) avant, du fil hélicoïdal (3), à proximité du contre-appui, est capable d'être introduite, en obliquant par suite cette dernière de 90 ° dans le sens du pourtour du fil hélicoïdal, et que pour mener la partie libre (2a) du câble sur le bord marginal (3a) avant, du fil hélicoïdal (3), une boucle de guidage (5), formée de même en une seule pièce, à partir du fil (1c) rigide, est prévue, étant donné que une partie de la section de fil qui forme la queue (1a) du crochet de fixation (1), est courbée pour former une boucle, à travers laquelle la partie libre (2a) du câble peut être dirigée vers le coinceur (4) .

2. Crochet de fixation avec câble de retenue selon revendication 1, **caractérisé en ce que** la partie de la queue (1a) de crochet formant la boucle (5), est embobinée en forme de fil hélicoïdal, dont l'axe passe verticalement par rapport au sens d'extension de la queue (1a).

3. Crochet de fixation avec câble de retenue selon revendication 1 ou 2, **caractérisé en ce que** la boucle (5) de guidage est disposée, vue dans le sens axiale du fil hélicoïdal (3) vers le contre-appui, exactement au-dessus du coinceur (4) ou bien déplacée latéralement par rapport à ce dernier.

4. Crochet de fixation avec câble de retenue selon une ou plusieurs des revendication 1 à 3, **caractérisé en ce que** la section transversale de l'ouverture de la boucle (5) de guidage, correspond à la section transversale du câble de retenue (2), ou bien elle est plus large que cette dernière.

5. Crochet de fixation avec câble de retenue selon une ou plusieurs des revendication 1 à 4, **caractérisé en ce que** le coinceur (4) est prévu à la face externe du fil hélicoïdal (3) de telle manière que son fond (4a) se trouve à peu prés au même niveau que le bord (3a) avant du fil hélicoïdal (3) ou bien au-dessous de ce bord (3a).

6. Crochet de fixation avec câble de retenue selon revendication 5, **caractérisé en ce que** l'extrémité arrière (1d) du fil (1c) qui forme le fil hélicoïdal (3), est dirigée dans une direction essentiellement axiale le long de sa face externe, vers le haut en direction de son extrémité avant (3a) et est ensuite, coudée conformément, vers l'extérieur et vers le bas, dans le but de former le coinceur (4).

7. Crochet de fixation avec câble de retenue selon une ou plusieurs des revendication 1 à 6, **caractérisé en ce que** dans le cas de l'utilisation d'une sangle de serrage élastiquement souple comme étant câble de retenue (2), la largeur de l'ouverture du coinceur (4) est plus petite que l'épaisseur de la sangle (2) serrée.

8. Câble de retenue, en particulier en forme d'une sangle de serrage constituée d'un matériau élastiquement souple, **caractérisé en ce que** l'une de ces extrémités, en particulier ces deux extrémités sont dotées chacune d'un crochet de fixation (1) selon une ou plusieurs des revendications 1 à 7.

9. Câble de retenue selon revendication 8, **caractérisé en ce que** le câble (2) possède une section transversale ronde de préférence circulaire.

10. Câble de retenue selon revendication 8 ou 9, **caractérisé en ce que** pour l'assurage de câble de retenue (2) coincé, l'extrémité du câble (2b, figure 3) qui déborde du coinceur (4), est introduit de nouveau entre le fond (4a) du coinceur (4) et la partie de câble (2a) menée sur le bord (3a) avant du fil hélicoïdal (3), et est serrée pour former un noeud.
